# EUROPEAN PATENT APPLICATION

(11) **EP 4 431 277 A1**
(43) Date of publication of application: **18.09.2024**
(21) Application number: 22892549.1
(22) Date of filing: 21.10.2022
(51) Int. Cl.: B32B 27/32, B32B 7/022, B32B 7/027, B32B 27/20, B65D 65/40

(54) **LAMINATED SEALANT FILM**

(30) Priority: 12.11.2021 JP 2021184800; 19.10.2022 JP 2022167951
(71) Applicant: Toyobo Co., Ltd., Kita-ku Osaka-shi, Osaka 530-0001 (JP)
(72) Inventor: FUJINO, Hidetoshi, Inuyama-shi Aichi 484-8508 (JP)
(74) Representative: Vossius & Partner Patentanwälte Rechtsanwälte mbB
(86) International application number: PCT/JP2022/039338
(87) International publication number: WO 2023/085049

(57) **Abstract**

An object of the present invention is to provide a laminated sealant film including a propylene resin and a polyethylene resin and having excellent low temperature bag making properties and heat seal strength. The laminated sealant film satisfies all the following 1) to 8): 1) the laminated sealant film includes least a lamination layer and a sealing layer; 2) the lamination layer includes a resin composition including a polypropylene resin as a main component; 3) the sealing layer includes a resin composition including a mixture of a polypropylene resin and a polyethylene resin as a main component; 4) the sealing layer includes 1% by weight or more and 90% by weight or less of the polypropylene resin and 10% by weight or more and 99% by weight or less of the polyethylene resin based on 100% by weight of the mixture of the polypropylene resin and the polyethylene resin; 5) the polyethylene resin of the sealing layer includes 90% by weight or more of a straight-chained linear polyethylene resin; 6) a difference between a melting point of the polypropylene resin of the sealing layer and a melting point of the straight-chained linear polyethylene resin of the sealing layer is 15°C or higher; 7) a ratio of a melt flow rate of the polypropylene resin of the sealing layer to a melt flow rate of the straight-chained linear polyethylene resin of the sealing layer is 0.5 or more and 2.0 or less; 8) each of the polypropylene resin of the sealing layer and the straight-chained linear polyethylene resin of the sealing layer has a melt flow rate of 9 g/10min or less.

## Description

### TECHNICAL FIELD

The present invention relates to a laminated sealant film having excellent bag making properties, low temperature bag making properties, and seal strength.

### BACKGROUND ART

Packaging materials have been developed according to the contents of various commodities, including food, beverages, pharmaceuticals, and chemicals. Packaging materials have been used for various purposes, for example, pillow packaging, gusset packaging, and three-sided seal packaging, and sealant film used as a packaging material possesses functionalities required depending on its intended applications.

Sealant film that can be heat-sealed at a lower temperature is better. In particular, sealant film with such a characteristic can be used suitably in the automated bag making process which are conducted while the contents are being packaged to produce a pillow packaging bag, a gusset packaging bag, and a three-sided seal packaging bag, resulting in the reduction of electricity costs and enhanced workability due to decreased risk of burns. In addition, the speed of packaging and bag making can be increased and losses of packaging material can be decreased. Further, a packaging bag can be produced with a high finish.

However, in the first place, sealant film is required to be smoothly processed in packaging and bag making processes and the resulting packaging bag is required to have various functions such as hermeticity and good seal strength.

For example, in automated vertical pillow packaging of heavy contents, a sealant film needs to have sufficient seal strength even when the sealant film resin is molten immediately after heat sealing, so that a sealed portion can be prevented from being peeled by pressure shock due to filling of heavy contents in a bag.

Further, in automated horizontal pillow packaging of contents, a sealant film needs to have sufficient seal strength when the sealant film resin is molten, so that a heat-sealed portion can be prevented from being peeled by high pressure gas (nitrogen flush) when a bag is filled with gas.

No conventional sealant film has satisfied all of bag making properties, low temperature bag making properties, and heat seal strength (for example, Patent Documents 1 to 5).

### CITATION LIST

### PATENT DOCUMENTS

Patent Document 1: JP-B2-4731699
Patent Document 2: JP-A-2000-272064
Patent Document 3: JP-A-2000-272065
Patent Document 4: JP-A-2020-241716
Patent Document 5: JP-A-2020-192695

### SUMMARY OF THE INVENTION

### PROBLEMS TO BE SOLVED BY THE INVENTION

It is an object of the present invention to provide a laminated sealant film containing a propylene resin and a polyethylene resin and having excellent low temperature bag making properties and heat seal strength.

### SOLUTION TO THE PROBLEMS

As a result of diligent studies to achieve such an object, the present inventors have found a laminated sealant film can have excellent low temperature bag making properties and seal strength by adjusting raw material composition of each layer of the laminated sealant film, and completed the invention.

That is, the laminated sealant film according to at least one embodiment of the present invention has the following features.

[1] A laminated sealant film comprising at least a lamination layer and a sealing layer, wherein the laminated sealant film satisfies all the following 1) to 8):
   1) the laminated sealant film comprises at least the lamination layer and the sealing layer;
   2) the lamination layer comprises a resin composition comprising a polypropylene resin as a main component;
   3) the sealing layer comprises a resin composition comprising a mixture of a polypropylene resin and a polyethylene resin as a main component;
   4) the sealing layer comprises 1% by weight or more and 90% by weight or less of the polypropylene resin and 10% by weight or more and 99% by weight or less of the polyethylene resin based on 100% by weight of the mixture of the polypropylene resin and the polyethylene resin;
   5) the polyethylene resin of the sealing layer comprises 90% by weight or more of a straight-chained linear polyethylene resin;
   6) a difference between a melting point of the polypropylene resin of the sealing layer and a melting point of the straight-chained linear polyethylene resin of the sealing layer is 15°C or higher;
   7) a ratio of a melt flow rate of the polypropylene resin of the sealing layer to a melt flow rate of the straight-chained linear polyethylene resin of the sealing layer is 0.5 or more and 2.0 or less;
   8) each of the polypropylene resin of the sealing layer and the straight-chained linear polyethylene resin of the sealing layer has a melt flow rate of 9 g/10min or less.
[2] The laminated sealant film according to [1], wherein the polypropylene resin of the sealing layer is a propylene random copolymer.
[3] The laminated sealant film according to [1] or [2], wherein the laminated sealant film has a tensile modulus in a longitudinal direction of less than 600 MPa.
[4] The laminated sealant film according to any one of [1] to [3], wherein the laminated sealant film has a main peak temperature of a melting point of 120°C or higher.
[5] The laminated sealant film according to any one of [1] to [4], wherein the laminated sealant film has a static coefficient of friction between sealing surfaces of 0.5 or less.
[6] The laminated sealant film according to any one of [1] to [5], wherein the laminated sealant film has a dynamic coefficient of friction between sealing surfaces of 0.5 or less.
[7] The laminated sealant film according to any one of [1] to [6], wherein the sealing layer comprises an organic particle as an anti-blocking agent.
[8] The laminated sealant film according to any one of [1] to [7], wherein the sealing layer comprises two or more fatty acid amides as organic lubricants.

### EFFECTS OF THE INVENTION

The laminated sealant film of the present invention has excellent low temperature bag making properties; therefore, the laminated sealant film is suitable as a packaging material for many commodities, including food, beverages, pharmaceuticals, and chemicals. In particular, the laminated sealant film is suitably used in an automated bag making process of, for example, a pillow packaging bag, a gusset packaging bag, and a three-sided seal packaging bag while packaging their contents.

### DESCRIPTION OF EMBODIMENTS

Hereinafter, the present invention will be described. A laminated sealant film of at least one embodiment of the present invention includes at least a lamination layer and a sealing layer. The followings are detailed description of the lamination layer and the sealing layer.

### (Sealing layer)

The sealing layer contains a resin composition containing a mixture of a polypropylene resin and a polyethylene resin as a main component.

The term "main component" as used herein means that the content of the mixture of the polypropylene resin and the polyethylene resin in the resin composition is 90% by mass or more, and the content is more preferably 95% by weight or more, further preferably 97% by weight or more, further more preferably 99% by weight or more.

### (Polypropylene resin)

The polypropylene resin of the sealing layer is a resin containing propylene as a main component, and examples of the polypropylene resin include propylene homopolymers, random copolymers and block copolymers of propylene and ethylene and/or an α-olefin such as 1-butene, 1-pentene, 1-hexene, 3-methylbutene-1, 4-methylpentene-1, or 1-octene. The term "main component" as used herein means that the content of propylene in the polypropylene resin is 90% by mass or more, and the content is more preferably 95% by weight or more, further preferably 97% by weight or more, further more preferably 99% by weight or more.

The polypropylene resin of the sealing layer has a melt flow rate of preferably 0.1 g/10min or more and 9 g/10min or less, more preferably 0.5 g/10min or more and 8 g/10min or less, and further more preferably 1 g/10min or more and 7 g/10min or less.

The polypropylene resin of the sealing layer has a melting point of preferably 120°C or higher, more preferably 125°C or higher and 150°C or lower, and further more preferably 130°C or higher and 140°C or lower.

The sealing layer contains preferably 1% by weight or more and 90% by weight or less, and more preferably 5% by weight or more and 90% by weight or less of the polypropylene resin based on 100% by weight of the mixture of the polypropylene resin and the polyethylene resin. The polypropylene resin content of 1% by weight or more enables enhanced slipperiness and decreased fluctuation in reaching heat seal strength.

### (Polyethylene resin)

The polyethylene resin of the sealing layer contains a linear low-density polyethylene as a main component.

In addition to linear low-density polyethylene, for example, the polyethylene resin may contain at least one type of ethylene homopolymer selected from the group consisting of high-pressure low-density polyethylene, medium-density polyethylene, and high-density polyethylene.

Further, an ethylene-based random or block copolymer of ethylene, propylene, an α-olefin such as 1-butene, 1-pentene, 1-hexene, 3-methylbutene-1, 4-methylpentene-1, or 1-octene, and/or a monomer such as vinyl acetate, (meth)acrylic acid, or (meth)acrylate ester, or mixtures thereof may be contained. These may be crystalline, low crystalline, or amorphous.

The polyethylene resin of the sealing layer has a melt flow rate of from 0.1 g/10min to 9 g/10min, preferably from 0.5 g/10min to 8 g/10min, and more preferably from 1 g/10min to 7 g/10min.

The polyethylene resin of the sealing layer has a melting point of from 100°C to 140°C, preferably from 105°C to 135°C, and more preferably from 110°C to 130°C.

The polyethylene resin of the sealing layer contains a straight-chained linear polyethylene resin in an amount of preferably 90% by weight or more, more preferably 95% by weight or more, further preferably 97% by weight or more, and further more preferably 99% by weight or more.

The sealing layer contains 1% by weight or more and 90% by weight or less of the polypropylene resin, and preferably 10% by weight or more and 99% by weight or less of the polyethylene resin, more preferably from 20% by weight to 90% by weight of the polyethylene resin, based on 100% by weight of the mixture of the polypropylene resin and the polyethylene resin. The content of the polypropylene resin of less than 1% by weight causes delamination between the sealing layer and the intermediate layer in addition to fluctuated seal strength.

A difference in melting points between the polypropylene resin and the polyethylene resin of the sealing layer is preferably 15°C or higher, more preferably 16°C or higher, further preferably 17°C or higher, further more preferably 18°C or higher, and particularly preferably 19°C or higher. The difference in melting points between the polypropylene resin and the polyethylene resin of 15°C or higher enables enhanced low temperature bag making properties, high miscibility of the polypropylene resin and the polyethylene resin, and decreased fluctuation in seal strength.

An arithmetic mean melting point of the polypropylene resin and the polyethylene resin of the sealing layer is preferably 100°C or higher, more preferably 112°C or higher, further preferably 115°C or higher, further more preferably 116°C or higher, and particularly preferably 121°C or higher. The arithmetic mean melting point of the polypropylene resin and the polyethylene resin of 100°C or higher gives improved boiling resistance to a packaging material, the arithmetic mean melting point of 105°C or higher gives further improved semi-retorting resistance, the arithmetic mean melting point of 116°C or higher gives further improved retorting resistance, and the arithmetic mean melting point of 121°C or higher gives further improved high-retorting resistance.

### (Anti-blocking agent)

The resin composition of the sealing layer may contain an anti-blocking agent. Examples of the anti-blocking agent include inorganic particles such as synthetic silica, diatomaceous earth, talc, and mica, and organic particles such as silicone particles, acrylic particles, nylon particles, and polyethylene particles. The particle of the anti-blocking agent has an average particle size of preferably 2 µm or more, more preferably 3 µm or more, and further preferably 5 µm or more. The average particle size is preferably 20 µm or less, more preferably 15 µm or less, and further preferably 10 µm or less.

The content of the particle in the resin composition of the sealing layer is preferably 0.1% by weight or more, more preferably 0.3% by weight or more, further preferably 0.4% by weight or more with respect to the sealing layer. The content is preferably 2% by weight or less, more preferably 1.5% by weight or less, and further preferably 1.0% by weight or less. The amount of addition of the particle of less than 0.1% by weight makes it difficult for at least one surface layer to have surface roughness Ra of 0.1 µm or more, and thus anti-blocking properties and slipperiness may not be achieved. The amount of addition of the particle of more than 2% by weight may increase surface protrusions, resulting in appearance defects and lowered scratch resistance.

### (Organic lubricant)

The resin composition of the sealing layer preferably contains fatty acid amides as organic lubricants in an amount of preferably from 0.01% by weight to 2.0% by weight, more preferably from 0.05% by weight to 1.5% by weight, and particularly preferably from 0.1% by weight to 1.0% by weight. The fatty acid amides of less than 0.01% may cause strong blocking between the films, resulting in unsatisfactory handleability of the film. The content of 2.0% or more may decrease seal strength.

Examples of the fatty acid amides include erucamide, ethylenebisoleamide, and behenamide, and they may be used in combination of two or more.

When the resin compositions or raw material resins of the sealing layer have closer melt flow rates with each other, excellent appearance can be achieved in proportion to the closeness. A ratio of melt flow rates of raw material resins mixed for the sealing layer is preferably 0.5 or more and 2.0 or less, more preferably 0.8 or more and 1.8 or less, and further preferably 1.0 or more and 1.6 or less. The ratio of the melt flow rates within the range can reduce appearance defects such as misalignment of layers, mela, and unevenness.

### (Lamination layer)

The lamination layer contains a resin composition containing a polypropylene resin as a main component. The term "main component" as used herein means that the content of the polypropylene resin in the resin composition is 90% by mass or more, and the content is more preferably 95% by weight or more, further preferably 97% by weight or more, further more preferably 99% by weight or more.

### (Polypropylene resin)

The polypropylene resin of the lamination layer is a resin containing propylene as a main component, and examples of the polypropylene resin include propylene homopolymers, random copolymers and block copolymers of propylene and ethylene and/or an α-olefin such as 1-butene, 1-pentene, 1-hexene, 3-methylbutene-1, 4-methylpentene-1, or 1-octene. Among them, random and/or block copolymers of propylene and ethylene and/or an α-olefin such as 1-butene, 1-pentene, 1-hexene, 3-methylbutene-1, 4-methylpentene-1, or 1-octene are preferred. The term "main component" as used herein means that the content of propylene in the polypropylene resin is 90% by mass or more, and the content is more preferably 95% by weight or more, further preferably 97% by weight or more, further more preferably 99% by weight or more.

The polypropylene resin of the lamination layer has a melt flow rate (JIS K 7112) of preferably 0.1 g/10min or more and 9 g/10min or less, more preferably 0.5 g/10min or more and 8 g/10min or less, and further more preferably 1 g/10min or more and 7 g/10min or less.

The polypropylene resin of the lamination layer has a melting point (JIS K 7121) of preferably 120°C or higher and 160°C or lower, more preferably 125°C or higher and 155°C or lower, and further more preferably 130°C or higher and 150°C or lower.

The polypropylene resin of the lamination layer is a resin containing propylene as a main component, and examples of the polypropylene resin include propylene homopolymers, random copolymers and block copolymers of propylene and ethylene and/or an α-olefin such as 1-butene, 1-pentene, 1-hexene, 3-methylbutene-1, 4-methylpentene-1, or 1-octene. Among them, preferred is a random copolymer of propylene and ethylene and/or 1-butene.

In addition to the polypropylene resin, the resin composition of the lamination layer may contain, for example, at least one type of ethylene homopolymer selected from the group consisting of high-pressure low-density polyethylene, linear low-density polyethylene resin, medium-density polyethylene, and high-density polyethylene.

Further, an ethylene-based random or block copolymer of ethylene, propylene, an α-olefin such as 1-butene, 1-pentene, 1-hexene, 3-methylbutene-1, 4-methylpentene-1, or 1-octene, and/or a monomer such as vinyl acetate, (meth)acrylic acid, or (meth)acrylate ester, or mixtures thereof may be contained. These may be crystalline, low crystalline, or amorphous.

The polyethylene resin of the lamination layer has a melt flow rate (JIS K 7112) of preferably 0.1 g/10min or more and 9 g/10min or less, more preferably 0.5 g/10min or more and 8 g/10min or less, and further more preferably 1 g/10min or more and 7 g/10min or less.

The polyethylene resin of the lamination layer has a melting point (JIS K 7121) of preferably 100°C or higher and 140°C or lower, more preferably 105°C or higher and 135°C or lower, and further more preferably 110°C or higher and 130°C or lower.

In the determination of the melting point of the polyethylene resin, two or more of melting endothermic peaks are observed in some cases, and a peak with the highest melting endotherm value is determined as a main peak.

### (Anti-blocking agent)

The resin composition of the lamination layer may contain an anti-blocking agent. Examples of the anti-blocking agent include inorganic particles such as synthetic silica, diatomaceous earth, talc, and mica, and organic particles such as silicone particles, acrylic particles, nylon particles, and polyethylene particles. The particles of the anti-blocking agent have an average particle size of preferably 2 µm or more, more preferably 3 µm or more, and further preferably 5 µm or more. The average particle size is preferably 20 µm or less, more preferably 15 µm or less, and further preferably 10 µm or less.

The content of the particles in the resin composition of the lamination layer is preferably 0.1% by weight or more, more preferably 0.3% by weight or more, further preferably 0.4% by weight or more with respect to the sealing layer of the film. The content is preferably 2% by weight or less, more preferably 1.5% by weight or less, and further preferably 1.0% by weight or less. The amount of addition of the particles of less than 0.1% by weight makes it difficult for at least one surface layer to have surface roughness Ra of 0.1 µm or more, and thus anti-blocking properties and slipperiness may not be achieved. The amount of addition of the particles of more than 2% by weight may increase surface protrusions, resulting in appearance defects and lowered scratch resistance.

### (Organic lubricant)

The resin composition of the lamination layer preferably contains a fatty acid amide as an organic lubricant in an amount of preferably from 0.01% by weight to 2.0% by weight, more preferably from 0.05% by weight to 1.5% by weight, and particularly preferably from 0.1% by weight to 1.0% by weight. The fatty acid amide of less than 0.01% may cause strong blocking between the films, resulting in unsatisfactory handleability of the film. The content of 2.0% or more may decrease seal strength.

Examples of the fatty acid amide include erucamide, ethylenebisoleamide, and behenamide, and they may be used in combination of two or more.

When the resin compositions or raw material resins of the lamination layer have closer melt flow rates with each other, excellent appearance can be achieved in proportion to the closeness. A ratio of melt flow rates of raw material resins mixed for the sealing layer is preferably 0.5 or more and 2.0 or less, more preferably 0.8 or more and 1.8 or less, and further preferably 1.0 or more and 1.6 or less. The ratio of the melt flow rates within the range can reduce appearance defects such as misalignment of layers, mela, and unevenness.

### (Intermediate layer)

The laminated sealant film may include an intermediate layer between the lamination layer and the sealing layer. The intermediate layer contains a resin composition containing a polypropylene resin as a main component. The term "main component" as used herein means that the content of the polypropylene resin in the resin composition is 90% by mass or more, and the content is more preferably 95% by weight or more, further preferably 97% by weight or more, and further more preferably 99% by weight or more.

### (Polypropylene resin)

The polypropylene resin of the intermediate layer is a resin containing propylene as a main component, and the examples of the polypropylene resin include propylene homopolymers, random copolymers and block copolymers of propylene and ethylene and/or an α-olefin such as 1-butene, 1-pentene, 1-hexene, 3-methylbutene-1, 4-methylpentene-1, or 1-octene. Among them, a random copolymer of propylene and ethylene and/or an α-olefin such as 1-butene, 1-pentene, 1-hexene, 3-methylbutene-1, 4-methylpentene-1, or 1-octene is preferred. The term "main component" as used herein means that the content of propylene in the polypropylene resin is 90% by mass or more, and the content is more preferably 95% by weight or more, further preferably 97% by weight or more, further more preferably 99% by weight or more.

The polypropylene resin of the intermediate layer has a melt flow rate of preferably 0.1 g/10min or more and 9 g/10min or less, more preferably 0.5 g/10min or more and 8 g/10min or less, and further more preferably 1 g/10min or more and 7 g/10min or less.

The polypropylene resin of the intermediate layer has a melting point of preferably 120°C or higher and 160°C or lower, more preferably 125°C or higher and 150°C or lower, and further more preferably 130°C or higher and 140°C.

The polypropylene resin of the intermediate layer is a resin containing propylene as a main component, and examples of the polypropylene resin include propylene homopolymers, random copolymers and block copolymers of propylene and ethylene and/or an α-olefin such as 1-butene, 1-pentene, 1-hexene, 3-methylbutene-1, 4-methylpentene-1, or 1-octene. Among them, a random copolymer of propylene and ethylene and/or 1-butene is preferred.

In addition to the polypropylene resin, the resin composition of the intermediate layer may contain, for example, at least one ethylene homopolymer selected from the group consisting of high-pressure low-density polyethylene, linear low-density polyethylene, medium-density polyethylene, and high-density polyethylene.

Further, an ethylene-based random or block copolymer of ethylene, propylene, an α-olefin such as 1-butene, 1-pentene, 1-hexene, 3-methylbutene-1, 4-methylpentene-1, or 1-octene, and/or a monomer such as vinyl acetate, (meth)acrylic acid, and (meth)acrylate ester, or mixtures thereof may be contained. These may be crystalline, low crystalline, or amorphous.

The polyethylene resin of the intermediate layer has a melt flow rate of preferably 0.1 g/10min or more and 9 g/10min or less, more preferably 0.5 g/10min or more and 8 g/10min or less, and further more preferably 1 g/10min or more and 7 g/10min or less.

The polyethylene resin of the intermediate layer has a melting point of preferably 100°C or higher and 140°C or lower, more preferably 105°C or higher and 135°C or lower, and further more preferably 110°C or higher and 130°C or lower.

### (Anti-blocking agent)

The resin composition of the intermediate layer may contain an anti-blocking agent. Examples of the anti-blocking agent includes inorganic particles such as synthetic silica, diatomaceous earth, talc, and mica, and organic particles such as silicone particles, acrylic particles, nylon particles, and polyethylene particles. The particles have an average particle size of preferably 2 µm or more, more preferably 3 µm or more, and further preferably 5 µm or more. The average particle size is preferably 20 µm or less, more preferably 15 µm or less, and further preferably 10 µm or less.

The content of the particles in the resin composition of the intermediate layer is preferably 0.1% by weight or more, more preferably 0.3% by weight or more, and further preferably 0.4% by weight or more with respect to the sealing layer of the film. The content is preferably 2% by weight or less, more preferably 1.5% by weight or less, and further preferably 1.0% by weight or less.

### (Organic lubricant)

The resin composition of the intermediate layer preferably contains a fatty acid amide as a lubricant in an amount of preferably from 0.01% by weight to 2.0% by weight, more preferably from 0.05% by weight to 1.5% by weight, and particularly preferably from 0.1% by weight to 1.0% by weight. The fatty acid amide of less than 0.01% may cause strong blocking between the films, resulting in unsatisfactory handleability of film. The content of 2.0% or more may decrease seal strength.

Examples of the fatty acid amide include erucamide, ethylenebisoleamide, and behenamide, and they may be used in combination of two or more.

When the resin compositions or raw material resins of the intermediate layer have closer melt flow rates with each other, excellent appearance can be achieved in proportion to the closeness. A ratio of melt flow rates of raw material resins mixed for the sealing layer is preferably 0.5 or more and 2.0 or less, more preferably 0.8 or more and 1.8 or less, and further preferably 1.0 or more and 1.6 or less. The ratio of the melt flow rates within the range can reduce appearance defects such as misalignment of layers, mela, and unevenness.

### (Layer structure)

The laminated sealant film can have layer structure of "lamination layer/sealing layer", "lamination layer/intermediate layer/sealing layer", or "lamination layer/intermediate layer 1/intermediate layer 2/sealing layer". The intermediate layer is preferably provided between the lamination layer and the sealing layer so that the delamination between the lamination layer and the sealing layer can be prevented and that recycled raw materials can be used. The intermediate layer preferably has an intermediate raw material composition between raw material compositions of the lamination layer and the sealing layer so that the delamination between the lamination layer and the sealing layer can be prevented.

With an increase in difference in melt flow rates of raw material resins of adjacent layers and/or with an increase in difference in melt flow rates of raw materials resins mixed for each layer, the appearance defects become worse. The ratio of melt flow rates of raw material resins of adjacent layers is preferably from 0.5 to 2.0. The ratio of melt flow rates within the range can reduce appearance defects such as misalignment of layers, mela, and unevenness.

The laminated sealant film has a main peak of a melting point of preferably 121°C or higher, more preferably 130°C or higher, further preferably 140°C or higher, further more preferably 150°C or higher, and particularly preferably 160°C or higher. When the main peak of the melting point is observed at 121°C or higher, high-retorting resistance can be further increased.

### (Method for producing laminated sealant film)

A method for producing the laminated sealant film will be described in detail below, however, the production method is not limited thereto.

The resin compositions of the lamination layer and the sealing layer can be prepared by blending resin raw materials, and additives, if needed, with a mixer, for example, a Henschel mixer, a Banbury mixer, or a tumbler mixer. The resin composition is subsequently extruded from a single or a twin-screw extruder into pellets, and then the pellets are formed into film. Alternatively, a raw material composition in a blended state can be introduced into a film molding machine.

### (Melt extrusion step)

The mixed resin composition is melted under the condition of, for example, a resin temperature of from 110°C to 300°C, subsequently, the molten resin is melt extruded, for example, from a T-die into a sheet shape, then the sheet is cast onto a cooling roll to be solidified by cooling, and an unstretched sheet is obtained. Casting onto a cooling roll is preferred as a specific method for this.

The film of multilayered structure can be obtained by using a multi-layering apparatus such as a multi-layer feedblock, a static mixer, and a multi manifold die. For example, in one method, resins fed from different channels by using two or more extruders can be multilayered with a multilayer feed block or a multimanifold die.

A melt kneaded resin composition can be melt extruded into a sheet by a T-die method or an inflation method to be formed into film, and T-die method is particular desirable in that melt temperature of resin can be increased.

### (Cooling solidification step)

For example, a sheet melt extruded from a T-die is preferably cast onto a cooling roll to be cooled. The lower limit of the cooling roll temperature is preferably 10°C. A cooling roll temperature lower than the range is not preferred because such a temperature may cause saturation of the effect of crystallization inhibition in addition to condensation. The upper limit of the cooling roll temperature is preferably 70°C or lower. A cooling roll temperature higher than the range promotes crystallization, disadvantageously leading to lowered transparency. When the cooling roll temperature is controlled to the range, humidity of the environment in the vicinity of the cooling roll is preferably lowered to prevent condensation.

The casting of a sheet onto a cooling roll causes an increase in the temperature of the surface of the cooling roll due to the contact of hot resin with the surface. Normally, a cooling roll is cooled by circulating cooling water through internal pipes passing through the inside of the cooling roll, and temperature difference in the width direction of the surface of the cooling roll is required to be reduced by ensuring adequate cooling water quantity, arranging the piping, or by maintenance to prevent sludge from sticking to the pipework.

The thickness of the unstretched sheet is preferably in the range of 3 µm or more and 200 µm or less. The thickness of the film is preferably in the range of 5 µm or more and 100 µm or less, and more preferably 10 µm or more and 80 µm or less.

### (Film characteristics)

The laminated sealant film has the following characteristics. "The longitudinal direction" for the laminated sealant film denotes a direction corresponding to the flow direction in the production process of the film and "the width direction" denotes a direction that is perpendicular to the flow direction in the production process of the film. Hereinafter, "the longitudinal direction" is represented as "MD direction" and "the width direction" is represented as "TD direction" in some cases.

### (Film appearance)

The laminated sealant film is required to have typical homogeneity and excellent appearance.

For example, thickness unevenness should preferably be reduced, defects such as fisheye, foreign matter, streaky defect, and scratch should preferably be reduced, uneven coloring and wrinkling should also preferably be reduced, and the film should preferably have no pinhole. When measured by the method described in Examples, the number of detected foreign matter having the size of 1 mm square or more and less than 2 mm square is preferably less than 100 per 10000 m², and a foreign matter having the size of 1 mm square or more is not more preferably detected.

### (Haze)

The laminated sealant film has haze of preferably 10% or less, more preferably 9% or less, further preferably 8% or less, further more preferably 7% or less, and particularly preferably 5% or less. In cases where the laminated sealant film has haze of more than 10%, the film often has streaky defects and scratches, and the content cannot be easily visually confirmed.

The laminated sealant film has haze of preferably 1% or more, more preferably 2% or more, and further preferably 3% or more. In cases where the laminated sealant film has haze of 1% or more, the blocking strength cannot be easily lowered.

### (Static coefficient of friction)

The laminated sealant film has a static coefficient of friction between sealing surfaces of preferably 2.0 or less, more preferably 1.0 or less, and further preferably 0.5 or less when measured under a load of 0.5 kgf. The static coefficient of friction of 2.0 or more may cause insufficient slipperiness between the films, resulting in unsatisfactory handleability as a packaging material.

The laminated sealant film has a static coefficient of friction between sealing surfaces of preferably 2.0 or less, more preferably 1.0 or less, and further preferably 0.5 or less when measured under a load of 1.5 kgf. The static coefficient of friction of 2.0 or more may cause insufficient slipperiness between the films, resulting in unsatisfactory handleability as a packaging material.

### (Dynamic coefficient of friction)

The laminated sealant film has a dynamic coefficient of friction between sealing surfaces of preferably 2.0 or less, more preferably 1.0 or less, and further preferably 0.5 or less when measured under a load of 0.5 kgf. The dynamic coefficient of friction of 2.0 or more may cause insufficient slipperiness between the films, resulting in unsatisfactory handleability as a packaging material.

The laminated sealant film has a dynamic coefficient of friction between sealing surfaces of preferably 2.0 or less, more preferably 1.0 or less, and further preferably 0.5 or less when measured under a load of 1.5 kgf. The dynamic coefficient of friction of 2.0 or less may lead to sufficient slipperiness between the films, resulting in satisfactory handleability as a packaging material.

### (Scratch resistance)

The scratch resistance, which is measured by friction test between the sealing surface and the lamination surface of the inventive laminated sealant the films, is judged to be better when the change in haze before and after treatment is smaller. The amount of change is preferably 3% or less, more preferably 2% or less, and particularly preferably 1% or less.

The laminated sealant film has haze after friction test between the sealing surface and the lamination surface of preferably 10% or less, more preferably 8% or less, further more preferably 6% or less, and particularly preferably 5% or less.

### (Blocking strength)

The laminated sealant film has a blocking strength represented by a blocking value of preferably 500 N/15mm or less. The blocking value of 500 N/15mm or less allows bag making process to be conducted more easily. The blocking value is preferably 200 N/15mm or less, and more preferably 100 N/15mm or less.

### (Tensile modulus)

The laminated sealant film has a tensile modulus in the longitudinal direction of preferably 200 MPa or more, more preferably 250 MPa or more, further preferably 300 MPa or more, further more preferably 330 MPa or more, and particularly preferably 345 MPa or more. The tensile modulus of 200 MPa or more allows the bag making process to be conducted more easily.

The laminated sealant film has a tensile modulus in the width direction of preferably 200 MPa or more, more preferably 250 MPa or more, further preferably 300 MPa or more, further more preferably 330 MPa or more, and particularly preferably 345 MPa or more. The tensile modulus of 200 MPa or more allows the bag making process to be conducted more easily.

### (Reaching heat seal strength)

The laminated sealant film has a reaching heat seal strength of preferably 10 N/15mm or more, more preferably 12 N/15mm or more, further preferably 14 N/15mm or more, and particularly preferably 16 N/15mm or more. When the content has large mass and thus slightly increased reaching heat seal strength is required in a typical packaging bag, a reaching heat seal strength of 15 N/15mm or more is required.

The laminated sealant film has a variability rate of the reaching heat seal strength of preferably 20% or less, more preferably 19% or less, further preferably 17% or less, and particularly preferably 16% or less.

As one possible way to control the variability rate of the reaching heat seal strength to 20% or less, reduction of delamination between the sealing layer and the lamination layer of the laminated sealant film is considered. The condition between the sealing layer and the lamination layer can be confirmed by observing a section of a test piece after reaching heat seal strength measurement with a microscope.

### (Heat seal temperature)

The heat seal temperature is preferably 60°C or higher and 180°C or lower, more preferably 70°C or higher and 170°C or lower, and further preferably 80°C or higher and 160°C or lower.

Preferably, the lower limit of the heat seal temperature is determined to be a temperature that is lower than the lowest melting point of the polyethylene resin and/or the polypropylene resin of the sealing layer by 20°C or higher, and the upper limit of the heat seal temperature is determined to be a temperature that is higher than the highest melting point of the polyethylene resin and/or the polypropylene resin of the lamination layer by 10°C or higher.

The low-temperature sealability of heat-seal temperature is evaluated by the degree of lowering of heat seal temperature based on the heat seal temperature in Comparative Example 1, which will be described later. The low-temperature sealability of heat-seal temperature is preferably 5°C or higher, more preferably 10°C or higher, further preferably 15°C or higher, further more preferably 22°C or higher, particularly preferably 25°C or higher, and most preferably 27°C or higher.

### (Hot tack properties)

Regarding the hot tack properties of the laminated sealant film, the peeling distance of tac is desired to be 20 mm or less at lower temperature. The sealant film is judged to have high hot tack properties when the sealant films have sufficient seal strength, even when the sealant film resin is in a molten state.

Low-temperature sealability of hot tack properties is evaluated by the degree of lowering of heat seal temperature based on a hot tack temperature in Comparative Example 1, which will be described later. The low-temperature sealability of hot tack properties is preferably 5°C or higher, more preferably 10°C or higher, further preferably 15°C or higher, further more preferably 18°C or higher, and particularly preferably 20°C or higher.

### (Anti-breakage strength)

The anti-breakage strength of the laminated sealant film is evaluated by a bag made from the laminated sealant film. In case where the laminated sealant film is used as packaging material, for example, for a retort sterilization container requiring high anti-breakage strength, an anti-breakage strength of 20 kPa or more is preferred, more preferably 23 Pa or more, and further preferably 27 Pa or more.

Low-temperature sealability of anti-breakage strength is evaluated by the degree of lowering of temperature at which the anti-breakage strength reaches 0 kPa, based on the temperature at which the anti-breakage strength reaches 0 kPa in Comparative Example 1, which will be described later. The low-temperature sealability of anti-breakage strength is preferably 5°C or higher, more preferably 10°C or higher, further preferably 15°C or higher, and further more preferably 18°C or higher.

### EXAMPLES

### (Melting point of resin)

The melting point of the resin was measured by using a differential scanning calorimetry (model: DSC60, manufactured by Seiko Instruments Inc.) in accordance with JIS K 7121.

Specifically, the measurement was carried out as follows. First, a sample of approximately 5 mg was placed in an aluminum sample pan. Subsequently, the sample pan containing the sample was heated to 200°C from room temperature at a heating rate of 10°C/min, held at 200°C for 3 minutes, cooled to 23°C at a cooling rate of 10°C/min, held at 23°C for 3 minutes, and then heated again to 200°C at a heating rate of 10°C/min. In this process, a temperature at which the largest melting endothermic peak was observed was determined as a melting point. When two or more melting endothermic peaks were observed, the melting endothermic peak observed at the highest temperature was identified, and the temperature was determined as a melting point.

### (Melt flow rate)

The measurement was carried out by using a heat flow evaluation apparatus (capillary rheometer, model: CFT-500D, manufactured by Shimadzu Corporation) in accordance with JIS K 7112 at 230°C for polypropylene resin and at 190°C for polyethylene resin, for example, L-LDPE.

### (Average particle size)

Inorganic or polyethylene particles were dispersed in ion-exchange water under stirring at a predetermined rotation speed (approximately 5000 rpm) with a high-speed stirrer. Subsequently, the dispersion liquid was added to ISOTON (physiological saline solution) and the particles were further dispersed with an ultrasonic homogenizer, then the particle size distribution was measured by a Coulter counter method, and the volume average particle size was calculated. Refractive indices of 1.30 for physiological saline solution, 1.457 for synthetic silica and diatomaceous earth, and 1.54 for polyethylene were employed.

### (Film appearance 1)

The film appearance can be evaluated based on inspection items of fisheye, foreign matter, streaky defect, and scratch. The film was evaluated by inspection with a defect detector (model: MaxEye.X Series, manufactured by FUTEC INC.) for fisheye, foreign matter, streaky defect, and scratch. The evaluation criteria are as follows. The film evaluated to be "Good" can be used without problems. The film evaluated to be "Acceptable" can be used without problems in most cases, though purposes of use should be confirmed. The film evaluated to be "Bad" may be used with restrictions of purposes.

### Measurement conditions

Good: Fisheye, foreign matter, streaky defect, and scratch, each with the size of 1 mm square or more, were not detected.

Acceptable: the number of detected fisheye, foreign matter, streaky defect, and scratch, each with the size of 1 mm square or more and less than 2 mm square, was less than 100 per 10000 m².

Bad: the number of detected fisheye, foreign matter, streaky defect, and scratch, each with the size of 1 mm square or more and less than 2 mm square, was 100 or more per 10000 m², and/or a foreign matter with the size of 2 mm square or more was detected.

In the criteria, the color of the foreign matter was not considered.

### (Film appearance 2)

The film appearance was evaluated also by haze.

### (Haze)

The laminated sealant film was subjected to measurement with a turbidity meter (model: ZE2000, manufactured by NIPPON DENSHOKU INDUSTRIES CO., LTD.) in accordance with JIS K8701. A laminate including the laminated sealant film was also subjected to measurement in the same manner.

### (Static coefficient of friction and dynamic coefficient of friction)

The dynamic coefficient of friction and the static coefficient of friction were determined through measurement in an environment at 23°C and 65% R.H. in accordance with JIS K 7125 under the following conditions.

The load of 0.5 kgf or 1.5 kgf was applied.

The measurement surfaces were sealing surfaces facing each other, or a sealing surface and a lamination surface facing each other.

An instrument "TENSILON" (model: STM-T-50BP, manufactured by Toyo Baldwin Co., Ltd.) was used.

### (Scratch resistance)

The measurement was conducted in accordance with the following procedure with reference to JIS K7316.

Before the measurement of scratch resistance, haze of the laminated sealant film was measured in advance.

Subsequently, a load of 20 g was added to a flat abrading head of Gakushin color fastness tester (color fastness rubbing tester, flat abrading head: 20 mm × 20 mm, flat specimen base, sliding arc length: 100 mm, manufactured by YASUDA SEIKI SEISAKUSHO, LTD.), then the flat abrading head with the load was neatly covered with the laminated sealant film having the size of 60 mm × 60 mm, and the laminated sealant film was fixed with a jig. The same laminated sealant film as the film covering the flat abrading head with the load was put on the flat specimen base. The laminated sealant films were set so that the sealing surfaces would face with each other, similar to heat sealing.

Subsequently, the friction test by reciprocating slide of 50 times (10 m) was conducted, and haze after the friction test was measured.

The scratch resistance was evaluated by a value obtained by subtracting haze before the friction test from haze after the friction test.

### (Blocking strength)

The measurement was conducted in accordance with ASTM-D-1893-67.

Laminates (10 cm × 15 cm) each including the laminated sealant film were stacked on one another in such a manner that the measurement surfaces would face with each other, and the laminates were set to a tabletop test press (model: SA-303, manufactured by TESTER SANGYO CO., LTD.) so that an aluminum plate (size: 7 cm × 7 cm, thickness: 2 mm) would be placed on the laminates at a position in the middle of the sample width (10 cm) and 1 cm inside in the length direction (15 cm) with the edges of the laminates and the plate aligned in the same direction, and a pressure treatment was carried out at 50°C at a pressure of 440 kgf/cm² for 15 minutes.

Subsequently, the sample subjected to blocking by this pressure treatment and an aluminium rod (diameter: 6 mm) were set to "Autograph" (model: UA-3122, manufactured by Shimadzu Corporation), and the strength at which the aluminium rod peeled the blocked portion at a rate of 200 mm/min was measured. The measurement was conducted under the assumption that the aluminium rod was horizontal to the peeling surface. The measurement was conducted 4 times for the same sample, and the average of the 4 measurements was taken as a blocking strength.

### (Tensile modulus)

The measurement was carried out under the following conditions in accordance with JIS K 7127.

The tensile modulus in the flow direction of the film (MD) and the tensile modulus in the direction perpendicular to the flow direction of the film (TD) was measured 3 times in each direction under the conditions of the sample length of 100 mm, the sample width of 15 mm, a distance between chucks of 20 mm, and a rate of 200 mm/min. The average of the 3 measurements was determined as a tensile modulus in the direction.

### (Preparation of laminate including laminated sealant film)

A laminate of the laminated sealant film and a biaxially stretched polypropylene film (Pylen (registered trademark) P2161, thickness: 20 µm, manufactured by Toyobo Co., Ltd.) was prepared as follows.

An adhesive for dry laminate (type: TM569 (main agent), CAT-10L (curing agent), manufactured by Toyo-Morton, Ltd.) was applied to a corona treated surface of the biaxially stretched polypropylene film so that a solid content concentration would become 3 g/m², then a solvent was removed by evaporation in an oven set at 80°C. The corona treated surface of the laminated sealant film and the adhesive-applied surface were overlapped, and the films were nipped on a temperature controlled roll to 60°C to form a laminate. The laminate including the laminated sealant film was allowed to stand at 40°C for 2 days.

### (Reaching heat seal strength)

The measurement was conducted under the following conditions in accordance with JIS Z 1707.

Laminates each including the laminated sealant film were stacked on one another in such a manner that the sealing surfaces would face with each other. The laminates were heat sealed with a test sealer (semiautomatic spout sealing machine, model: TYB-300, manufactured by NISHIBE KIKAI CO., LTD.) equipped with a seal bar having a width of 10 mm at a sealing pressure of 0.2 MPa, for a sealing time of 1.0 second, at heat seal temperatures of 70°C, 80°C, 90°C, 100°C, 110°C, 120°C, 130°C, 140°C, 150°C, and 160°C respectively. After the heat sealing, the obtained sample was allowed to cool.

Each of the samples obtained by heat sealing by the test sealer was cut into strips having a width of the heat sealed portion of 15 mm. The strip was then set to a tensile tester (universal testing system, model: 5980 series, Instron Japan Company Limited), and the maximum strength during peeling of the sealing surfaces at a rate of 200 mm/min was measured. The measurement was conducted totally 3 times at each temperature, and the average of the 3 measurements was taken as a heat seal strength at a corresponding heat seal temperature.

Among the values of heat seal strength thus obtained, the highest value was determined as a reaching heat seal strength.

### (Rate of variability of reaching heat seal strength)

The rate of variability of reaching heat seal strength can be calculated according to the following Equation (1). rate of variability of reaching heat seal strength = (maximum value of reaching heat seal strength / minimum value of reaching heat seal strength) / average of reaching heat seal strength × 100 (%)

### (Heat seal temperature)

The measurement was conducted under the following conditions in accordance with JIS Z 1707.

Laminates each including the laminated sealant film were stacked on one another in such a manner that the sealing surfaces would face with each other. The laminates were heat sealed with a test sealer (spout sealing machine, model: TYB-300, manufactured by NISHIBE KIKAI CO., LTD.) equipped with a seal bar having a width of 10 mm at a sealing pressure of 0.2 MPa, for a sealing time of 1.0 second, at heat seal temperatures of 70°C, 80°C, 90°C, 100°C, 110°C, 120°C, 130°C, 140°C, 150°C, and 160°C respectively. After the heat sealing, the obtained sample was allowed to cool.

Each of the samples obtained by heat sealing by the test sealer was cut into strips having a width of the heat sealed portion of 15 mm. The strip was then set to a tensile tester (universal testing system, model: 5980 series, Instron Japan Company Limited), and the maximum strength during peeling of the sealing surfaces at a rate of 200 mm/min was measured. The measurement was conducted totally 3 times at each temperature, and the average of the 3 measurements was taken as a heat seal strength at a corresponding heat seal temperature, and a temperature at which the heat seal strength reached 10 N/15mm was determined as a heat seal temperature.

### (Low-temperature sealability of heat-seal temperature)

The low-temperature sealability of heat-seal temperature was evaluated by a difference in heat seal temperatures (°C) based on a heat seal temperature in Comparative Example 1, which will be described later.

Specifically, in the cases of Example 1 and Comparative Example 7, the low-temperature sealability was evaluated as follows.
(Heat seal temperature in Comparative Example 1: 135°C) - (Heat seal temperature in Example 1: 115°C) = 20°C
(Heat seal temperature in Comparative Example 1: 135°C) - (Heat seal temperature in Comparative Example 17: 135°C) = 0°C

### (Hot tack temperature)

Laminates each including the laminated sealant film were stacked on one another in such a manner that the sealing surfaces would face with each other. The laminates were heat sealed at a pressure of 2 kg/cm², for 1 second, at temperatures of 70°C, 80°C, 90°C, 100°C, 110°C, 120°C, 130°C, 140°C, 150°C, and 160°C respectively. After the heat sealing, a load of 46 g was applied, and a distance of peeling of the sealed portion was measured. The measurement was conducted with an instrument "HEAT SEAL TESTER" (model: TP-701-B, manufactured by TESTER SANGYO CO., LTD.).

The temperature of heat sealing at which the distance of peeling of heat sealed portion reached 20 mm was determined as a hot tack temperature.

### (Low-temperature sealability of hot tack temperature)

The low-temperature sealability of hot tack temperature was evaluated by a difference in hot tack temperatures (°C) based on a hot tack temperature in Comparative Example 1, which will be described later.

Specifically, in the cases of Example 1 and Comparative Example 7, the low-temperature sealability is evaluated as follows.
(Hot tack temperature in Comparative Example 1: 128°C) - (Hot tack temperature in Example 1: 118°C) = 10°C
(Hot tack temperature in Comparative Example 1: 118°C) - (Hot tack temperature in Comparative Example 7: 135°C) = -7°C

### (Anti-breakage strength)

Bag making was conducted by using a horizontal pillow packaging machine (model: FW3301 II/B BD100, manufactured by FUJI MACHINERY CO., LTD.) under the conditions of cut off length of 250 mm, height of 45 mm, number of revolutions of 40 rpm, reduction of temperature for center sealed portion of from 160°C at an interval of 10°C, and a fixed temperature for end sealed portion of 140°C. Bag making was conducted by using a sponge scrubber (type: KIKULON A, size: 75 mm × 115 mm × 36 mm, manufactured by KIKULON CO., LTD.) as a content. The bag produced was evaluated by visual inspection and anti-breakage strength (testing method for heat sealed flexible packages described in JIS Z 0238). The anti-breakage strength was measured with a seal intensity and a burst strength test machine (SEAL TESTER, model: FKT-100-J, manufactured by Sun Scientific Co., Ltd.).

### (Low-temperature sealability of anti-breakage strength)

The low-temperature sealability of anti-breakage strength was evaluated by a difference in temperatures (°C) at which an anti-breakage strength reached 0 kPa, based on a temperatures at which an anti-breakage strength reached 0 kPa in Comparative Example 1, which will be described later.

Specifically, in the cases of Example 1 and Comparative Example 7, the low-temperature sealability of anti-breakage strength was evaluated as follows.
(A temperature at which anti-breakage strength reached 0 kPa in Comparative Example 1: 110°C) - (A temperature at which anti-breakage strength reached 0 kPa in Example 1: 100°C) = 10°C
(A temperature at which anti-breakage strength reached 0 kPa in Comparative Example 1: 110°C) - (A temperature at which anti-breakage strength reached 0 kPa in Comparative Example 7: 130°C) = -20°C

### (Propylene copolymer)

PP-1: FL6745A (NOBLEN (registered trademark), propylene-ethylene-butene random copolymer, melting point: 132°C, melt flow rate: 6.0 g/10min, manufactured by Sumitomo Chemical Co., Ltd.)
PP-2: F744NP (Prime Polypro (registered trademark), ethylene-propylene random copolymer, melting point: 133°C, melt flow rate: 7.0 g/10min, manufactured by Prime Polymer Co., Ltd.)
PP-3: FS2011DG3 (NOBLEN (registered trademark), propylene random copolymer, melting point: 158°C, melt flow rate: 2.5 g/10min, manufactured by Sumitomo Chemical Co., Ltd.)
PP-4: WF893R9 (NOBLEN (registered trademark), propylene random copolymer, melting point: 137°C, melt flow rate: 7.0 g/10min, manufactured by Sumitomo Chemical Co., Ltd.)
PP-5: FLX64G2 (NOBLEN (registered trademark), propylene-ethylene-butene random copolymer, melting point: 138°C, melt flow rate: 7.0 g/10min, manufactured by Sumitomo Chemical Co., Ltd.)
PP-6: F-201SPB (Prime Polypro (registered trademark), propylene random copolymer, melting point: 160°C, melt flow rate: 2.0 g/10min, manufactured by Prime Polymer Co., Ltd.)

### (Ethylene polymer)

PE-1: FV401 (SUMIKATHENE (registered trademark) E, linear low density polyethylene resin, melting point: 112°C, melt flow rate: 3.8 g/10min, manufactured by Sumitomo Chemical Co., Ltd.)
PE-2: FV402 (SUMIKATHENE (registered trademark) E, linear low density polyethylene resin, melting point: 115°C, melt flow rate: 3.8 g/10min, manufactured by Sumitomo Chemical Co., Ltd.)
PE-3: FV403 (SUMIKATHENE (registered trademark) E, linear low density polyethylene resin, melting point: 117°C, melt flow rate: 3.8 g/10min, manufactured by Sumitomo Chemical Co., Ltd.)
PE-4: FV405 (SUMIKATHENE (registered trademark) E, linear low density polyethylene resin, melting point: 118°C, melt flow rate: 3.8 g/10min, manufactured by Sumitomo Chemical Co., Ltd.)
PE-5: FV407 (SUMIKATHENE (registered trademark) E, linear low density polyethylene resin, melting point: 124°C, melt flow rate: 3.2 g/10min, manufactured by Sumitomo Chemical Co., Ltd.)
PE-6: FV104 (SUMIKATHENE (registered trademark), linear low density polyethylene resin, melting point: 121°C, melt flow rate: 1.0 g/10min, manufactured by Sumitomo Chemical Co., Ltd.,)
PE-7: 3600F (Evolue (registered trademark), high density polyethylene resin, melting point: 133°C, melt flow rate: 1.0 g/10min, manufactured by Prime Polymer Co., Ltd.)
PE-8: 031GLD (UMERIT (registered trademark), linear low density polyethylene resin, melting point: 100°C, melt flow rate: 10.0 g/10min, manufactured by UBE-MARUZEN POLYETHYLENE)
PE-9: M12P (ULTZEX (registered trademark), low density polyethylene resin, melting point: 114°C, melt flow rate: 3.0 g/10min, manufactured by Mitsui Chemicals, Inc.)

### (Anti-blocking agent)

Synthetic silica: KMP130-2 (average particle size: 2 µm, manufactured by Shin-Etsu Chemical Co., Ltd.)
Diatomaceous earth: Dicalite WF (average particle size: 4 µm, manufactured by Grefco. Inc.)
Ultra-high molecular weight polyethylene particles: PM200 (average particle size: 10 µm, manufactured by Mitsui Chemicals, Inc.)

### (Organic lubricant)

Erucamide: DIAMID L-200 (product name), (melting point: 81°C, manufactured by Mitsubishi Chemical Corporation)
Behenamide: D1007 (product name), (melting point: 110°C, manufactured by Tokyo Chemical Industry Co., Ltd.)

### (Masterbatch)

1) Silica masterbatch: a masterbatch containing 15% by weight of silica was produced by mixing NOBLEN (registered trademark) FL6745 (manufactured by Sumitomo Chemical Co., Ltd.) and silica (KMP-130-2, average particle size: 2 µm, manufactured by Shin-Etsu Chemical Co., Ltd.).
2) Diatomaceous earth masterbatch: a masterbatch containing 12% by weight of diatomaceous earth was produced by mixing NOBLEN (registered trademark) FL6745 (manufactured by Sumitomo Chemical Co., Ltd.) and diatomaceous earth (Daikalite WF, average particle size: 4 µm, manufactured by Grefco. Inc.).
3) Masterbatch of ultra-high molecular weight polyethylene particles: a masterbatch containing 10% by weight of ultra-high molecular weight polyethylene particles was produced by mixing NOBLEN (registered trademark) FL6745 (manufactured by Sumitomo Chemical Co., Ltd.) and ultra-high molecular weight polyethylene particles (MIPELON PM200, average particle size: 10 µm, manufactured by Mitsui Chemicals, Inc.).
4) Erucamide masterbatch: a masterbatch containing 5% by weight of erucamide was produced by mixing NOBLEN (registered trademark) FL6745 (manufactured by Sumitomo Chemical Co., Ltd.) and erucamide.
5) Behenamide masterbatch: a masterbatch containing 2% by weight of behenamide was produced by mixing NOBLEN (registered trademark) FL6745 (manufactured by Sumitomo Chemical Co., Ltd.) and behenamide.

### (Examples 1 to 6)

Propylene-ethylene-butene random copolymer NOBLEN (registered trademark) FL6745A was used as a raw material for the lamination layer and the intermediate layer. As raw materials for the sealing layer, resins and additives shown in Table 1 were used. The raw materials for each layer were melted at 240°C in a dedicated extruder for each layer, totally 3 extruders, then the resulting molten resin was filtrated through a sintered filter (filtration accuracy: 60 µm), and the molten resins were co-extruded from a T-die in a sheet shape. The molten resins were melt extruded so that the ratio among thicknesses of the lamination layer, the intermediate layer, and the sealing layer would be 25:50:25 (vol.%), then the resulting sheet was solidified by cooing on a cooling roll set at 30°C, and wound into a roll shape at a rate of 20 m/min to obtain a laminated sealant film having a thickness of 30 µm and a wetting tension of the lamination layer of 45 mN/m. The evaluation results are shown in Table 1.

Laminated sealant films obtained in Examples 1 to 6 had excellent low-temperature sealability and hot tack properties in addition to stable anti-blocking properties and coefficients of friction, and the laminated sealant films had excellent appearance and scratch resistance. Also, the laminated sealant films had no problem with film-forming processability and exhibited sufficient anti-breakage strength. The film obtained in Example 4 had particularly high scratch resistance.

### (Examples 7 to 11)

Propylene-ethylene-butene random copolymer NOBLEN (registered trademark) FL8115 was used as a raw material for the lamination layer, and propylene-ethylene-butene random copolymer NOBLEN (registered trademark) FL6745A was used as a raw material for the intermediate layer. As raw materials for the sealing layer, resins and additives shown in Table 2 were used. The raw materials for each layer were melted at 240°C in a dedicated extruder for each layer, totally 3 extruders, then the resulting molten resin was filtrated through a sintered filter (filtration accuracy: 60 µm), and the molten resins were co-extruded from a T-die into a sheet shape. The molten resins were melt extruded so that the ratio among the thicknesses of the lamination layer, the intermediate layer, and the sealing layer would become 25:50:25 (vol.%), then the resulting sheet was solidified by cooling on a cooling roll set at 30°C, and wound into a roll shape at a rate of 20 m/min to obtain a laminated sealant film having a thickness of 30 µm and a wetting tension of the lamination layer of 45 mN/m. The evaluation results are shown in Table 2.

Laminated sealant films obtained in Examples 7 to 11 had excellent low-temperature sealability and hot tack properties in addition to stable anti-blocking properties and coefficients of friction, and the laminated sealant films had excellent appearance and scratch resistance. Also, the laminated sealant films had no problem with film-forming processability and exhibited sufficient anti-breakage strength.

### (Example 12)

Propylene-ethylene-butene random copolymer NOBLEN (registered trademark) FL8115 was used as a raw material for the lamination layer and the intermediate layer. As raw materials for the sealing layer, resins and additives shown in Table 2 were used. The raw materials for each layer were melted at 240°C in a dedicated extruder for each layer, totally 3 extruders, then the resulting molten resin was filtrated through a sintered filter (filtration accuracy: 60 µm), and the molten resins were co-extruded from a T-die into a sheet shape. The molten resins were melt extruded so that the ratio among the thicknesses of the lamination layer, the intermediate layer, and the sealing layer would be 20:60:20 (vol.%), then the resulting sheet was solidified by cooling on a cooling roll set at 30°C, and wound into a roll shape at a rate of 20 m/min to obtain a laminated sealant film having a thickness of 30 µm and a wetting tension of the lamination layer of 45 mN/m. The evaluation results are shown in Table 2.

The laminated sealant film obtained in Example 12 had excellent low-temperature sealability and hot tack properties in addition to stable anti-blocking properties and coefficient of friction, and the laminated sealant film had excellent appearance and scratch resistance. Also, the laminated sealant film had no problem with film-forming processability and exhibited sufficient anti-breakage strength.

### (Comparative Examples 1 to 10)

Polypropylene resin films were obtained in the same manner as Example 1 from raw materials of resins and additives shown in Tables 3 and 4. The evaluation results are shown in Tables 3 and 4.

Film obtained in Comparative Example 1 had inferior heat seal temperature, hot tack properties, and low-temperature sealability of anti-breakage strength.

Film obtained in Comparative Example 2 had inferior heat seal temperature, hot tack properties, and low-temperature sealability of anti-breakage strength.

Film obtained in Comparative Example 3 had low slipperiness and fluctuated heat seal temperature, resulting in insufficient bag making properties.

Film obtained in Comparative Example 4 had inferior low-temperature sealability of anti-breakage strength.

Film obtained in Comparative Example 5 had inferior low-temperature sealability of anti-breakage strength.

Film obtained in Comparative Example 6 had degraded appearance.

Film obtained in Comparative Example 7 had inferior appearance and low-temperature sealability of anti-breakage strength.

Film obtained in Comparative Example 8 had inferior reaching heat seal strength, anti-blocking properties, and scratch resistance.

Films obtained in Comparative Examples 9 and 10 had inferior reaching heat seal strength, anti-blocking properties, scratch resistance, and low-temperature sealability of anti-breakage strength.

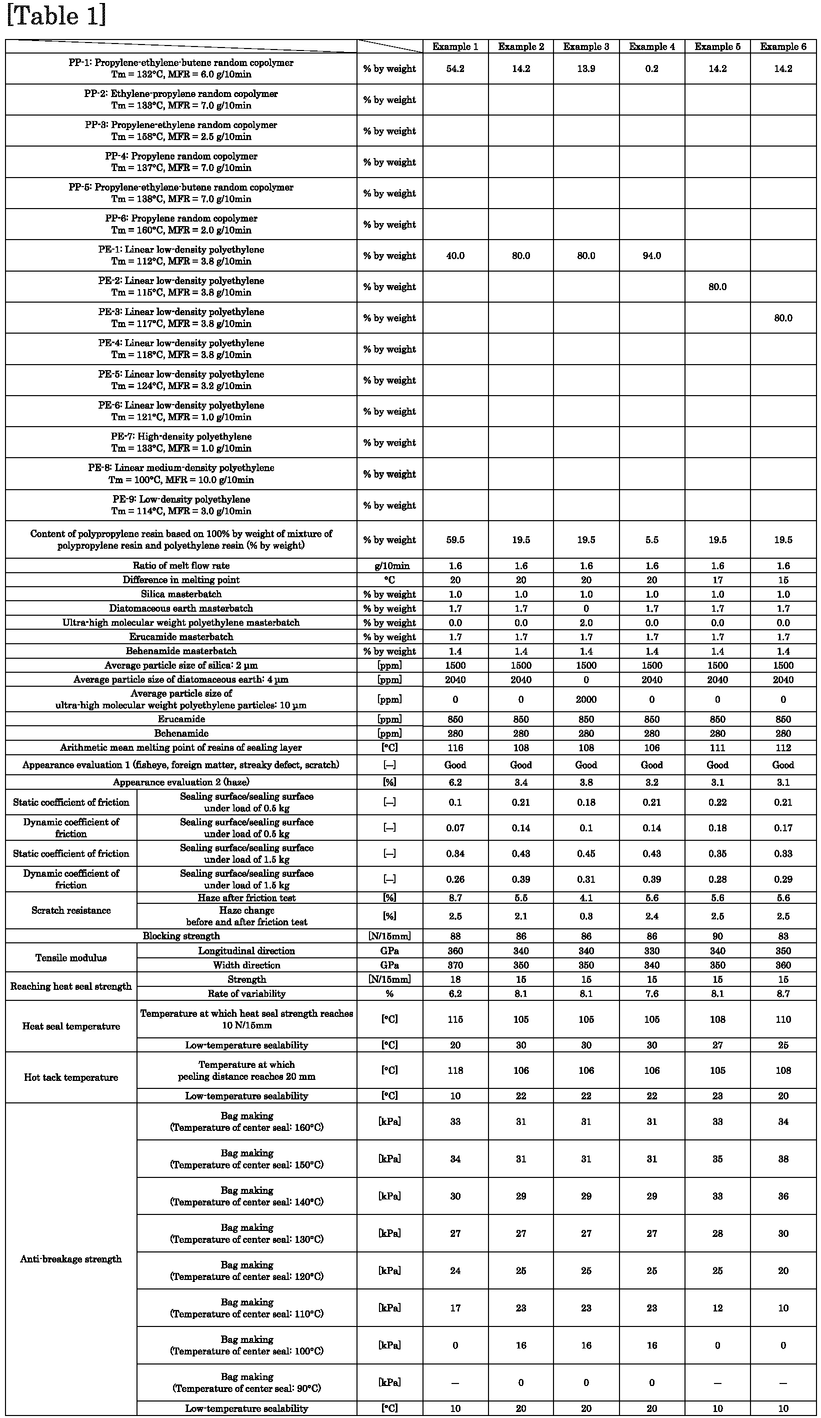

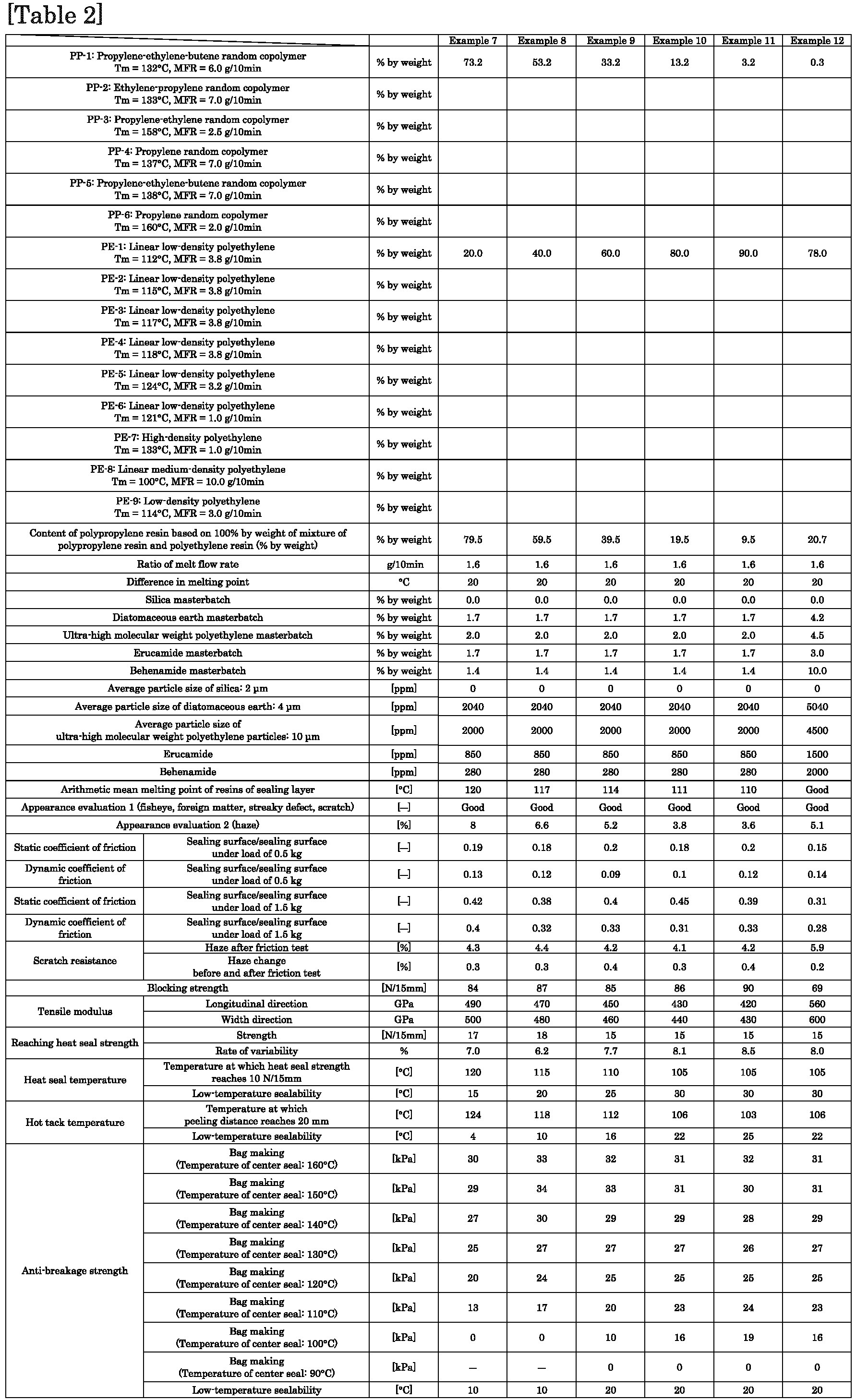

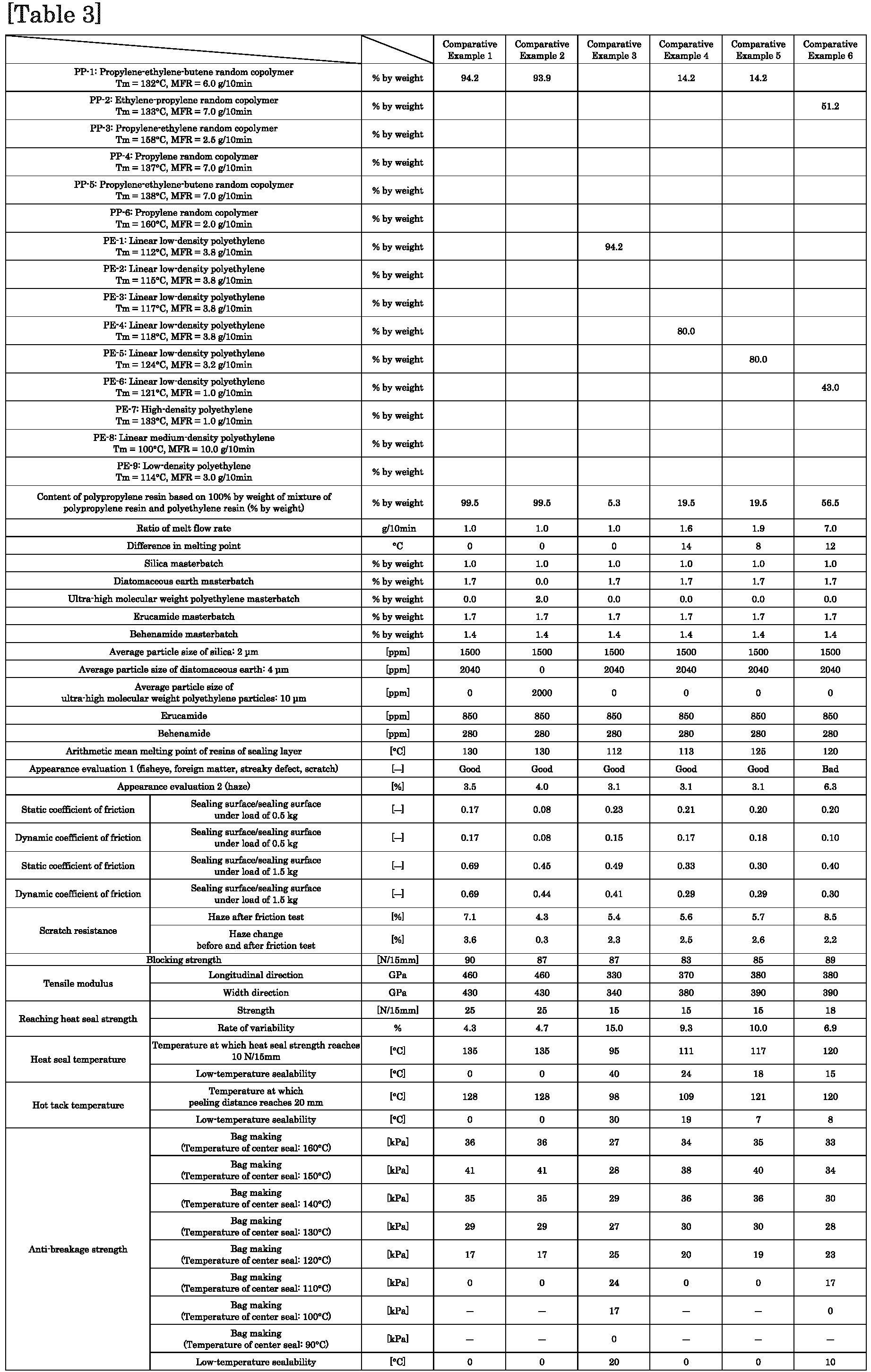

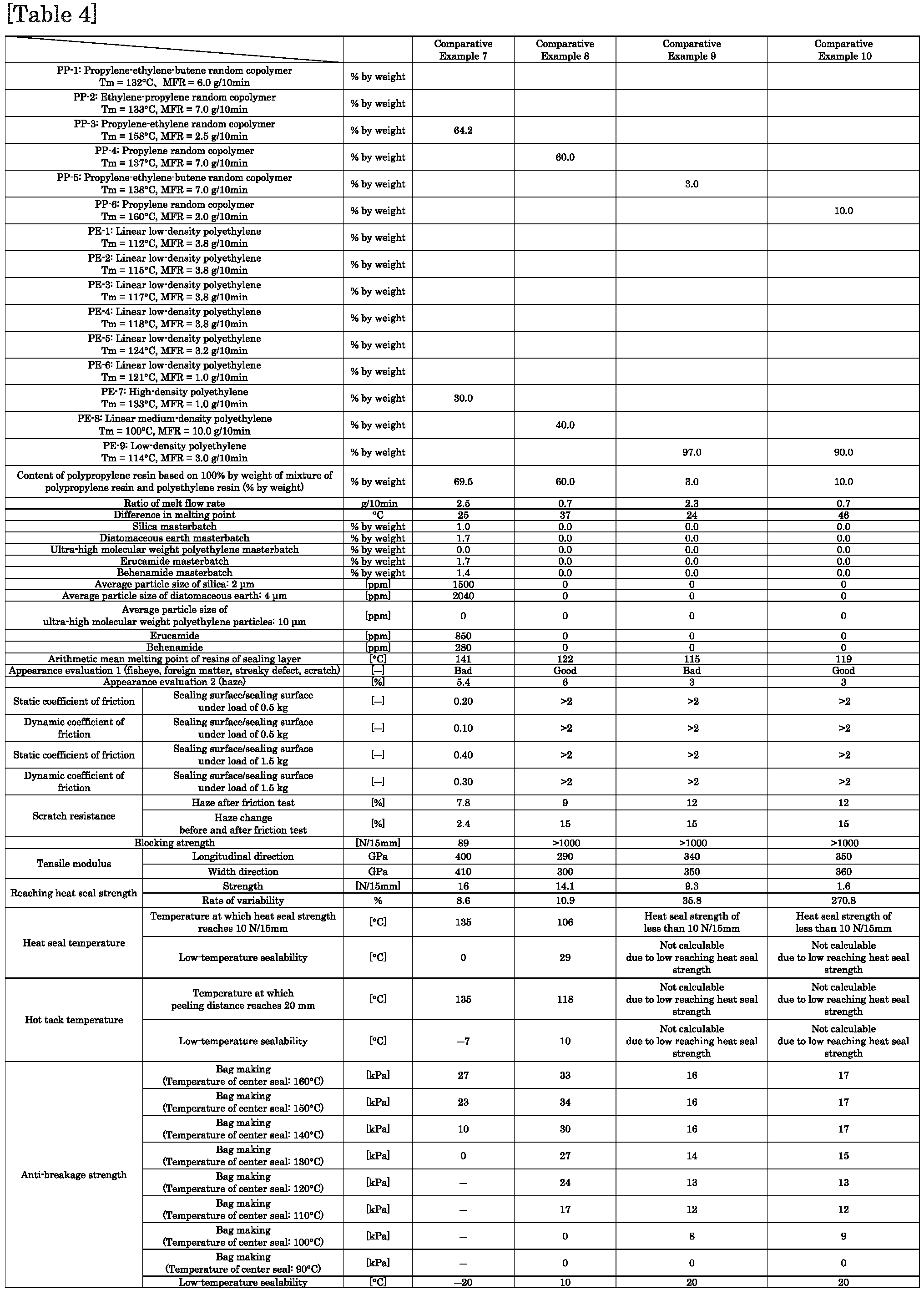

### INDUSTRIAL APPLICABILITY

The laminated sealant film of the present invention has excellent low temperature bag making properties; therefore, the laminated sealant film is suitable as a packaging material for many commodities, including food, beverages, pharmaceuticals, and chemicals. In particular, the laminated sealant film is suitably used in an automated bag making process of, for example, a pillow packaging bag, a gusset packaging bag, and a three-sided seal packaging bag that are conducted while packaging contents.

## Claims

1. A laminated sealant film comprising at least a lamination layer and a sealing layer,
wherein the laminated sealant film satisfies all the following 1) to 8):
1) the laminated sealant film comprises at least the lamination layer and the sealing layer;
2) the lamination layer comprises a resin composition comprising a polypropylene resin as a main component;
3) the sealing layer comprises a resin composition comprising a mixture of a polypropylene resin and a polyethylene resin as a main component;
4) the sealing layer comprises 1% by weight or more and 90% by weight or less of the polypropylene resin and 10% by weight or more and 99% by weight or less of the polyethylene resin based on 100% by weight of the mixture of the polypropylene resin and the polyethylene resin;
5) the polyethylene resin of the sealing layer comprises 90% by weight or more of a straight-chained linear polyethylene resin;
6) a difference between a melting point of the polypropylene resin of the sealing layer and a melting point of the straight-chained linear polyethylene resin of the sealing layer is 15°C or higher;
7) a ratio of a melt flow rate of the polypropylene resin of the sealing layer to a melt flow rate of the straight-chained linear polyethylene resin of the sealing layer is 0.5 or more and 2.0 or less;
8) each of the polypropylene resin of the sealing layer and the straight-chained linear polyethylene resin of the sealing layer has a melt flow rate of 9 g/10min or less.

2. The laminated sealant film according to claim 1, wherein the polypropylene resin is a propylene random copolymer.

3. The laminated sealant film according to claim 1 or 2, wherein the laminated sealant film has a tensile modulus in a longitudinal direction of less than 600 MPa.

4. The laminated sealant film according to any one of claims 1 to 3, wherein the laminated sealant film has a main peak temperature of a melting point of 120°C or higher.

5. The laminated sealant film according to any one of claims 1 to 4, wherein the laminated sealant film has a static coefficient of friction between sealing surfaces of 0.5 or less.

6. The laminated sealant film according to any one of claims 1 to 5, wherein the laminated sealant film has a dynamic coefficient of friction between sealing surfaces of 0.5 or less.

7. The laminated sealant film according to any one of claims 1 to 6, wherein the sealing layer comprises an organic particle as an anti-blocking agent.

8. The laminated sealant film according to any one of claims 1 to 7, wherein the sealing layer comprises two or more fatty acid amides as organic lubricants.
